# EUROPÄISCHE PATENTSCHRIFT

(11) **EP 1 637 776 B1**
(45) Veröffentlichungstag und Bekanntmachung des Hinweises auf die Patenterteilung: **18.07.2007**
(21) Anmeldenummer: 04022171.5
(22) Anmeldetag: 17.09.2004
(51) Int. Cl.: F16H 55/36

(54) **Riemenscheibe**
Pulley
Poulie

(43) Veröffentlichungstag der Anmeldung: 22.03.2006
(73) Patentinhaber: Aerzener Maschinenfabrik GmbH, 31855 Aerzen (DE)
(72) Erfinder: Fleige, Hans-Ulrich, 31785 Hameln (DE); Düwel, Norbert, 32683 Barntrup (DE); Tanner, Olaf, 30900 Wedemark (DE); Seidel, Günter, 31789 Hameln (DE)
(74) Vertreter: HOFFMANN EITLE

(56) Entgegenhaltungen:
- DE-A- 3 535 859
- DE-A- 4 336 559
- DE-A- 19 611 258
- US-A- 4 486 183
- US-A- 5 368 525

## Beschreibung

Die vorliegende Erfindung betrifft eine Riemenscheibe mit einer Nabe, einer Felge und einem zwischen Nabe und Felge angeordneten Verbindungsbereich, entsprechend dem Oberbegriff des Anspruchs 1.

Riemenscheiben mit diesem grundsätzlichen Aufbau sind in den verschiedensten Ausführungsformen seit langem bekannt. Die Felgen können dabei zur Aufnahme von Flachriemen, Keilriemen, Zahnriemen oder dergleichen Riemenarten ausgebildet sein. Je nach Einsatzzweck kann der Verbindungsbereich, der für die Kraftübertragung zwischen Nabe und Felge verantwortlich ist, von Speichen, geschlossenen oder durchbrochenen Scheiben oder dergleichen Verbindungselementen gebildet sein.

Riemenscheiben mit diesem grundsätzlichen Aufbau werden einstückig gegossen, durch Verschweißen mehrerer verschiedener Teile gebildet oder aus Blech durch Umformen hergestellt. Diese unterschiedlichen Bauweisen werden im Stand der Technik häufig auch miteinander kombiniert.

Für gegossene Riemenscheiben oder Teile davon wird meist Grauguss und in jüngerer Zeit auch Sphäroguss eingesetzt. Je nach Einsatzbereich und konstruktiven Vorgaben ist man bei der Herstellung von Riemenscheiben bemüht, bestimmte Eigenschaften zu verwirklichen. Grundsätzlich wird versucht, mit möglichst geringem Materialeinsatz auszukommen, um die Materialkosten möglichst gering zu halten. Ein geringer Materialeinsatz bewirkt in aller_Regel auch ein geringes Gewicht der Riemenscheiben, woraus eine einfache Handhabung bei der Montage und Demontage resultiert.

In vielen Fällen ist das Erreichen eines vorgegebenen Massenträgheitsmoments ein Konstruktionsziel. Hohe Massenträgheitsmomente werden beispielsweise für Schwungscheiben angestrebt. Überwiegend werden bei Riemenscheiben jedoch niedrige Massenträgheitsmomente angestrebt. Insbesondere dann, wenn schnelle Starteigenschaften für Maschinen bzw. eine geringere Leistungsaufnahme beim Start ein Konstruktionsziel darstellen. Bei geringerem Massenträgheitsmoment können in bestimmten Fällen sogar Antriebsmotore mit kleinerer Leistung gewählt werden.

Generell wird angestrebt, dass der Wirkungsgrad von Riementrieben möglichst hoch sein soll, d. h. unter anderem, dass die Riemenscheiben selbst eine möglichst geringe Leistung aufnehmen sollen.

Bei der Konstruktion von Riemenscheiben mit hohen Umfangsgeschwindigkeiten sind auch Übertragungsverluste zu berücksichtigen. Aus Schlupf und Biegung resultiert eine gewisse Wärmeentwicklung, die zu einer Temperaturerhöhung des Riemens führen kann. Hohe Riementemperaturen wiederum führen zur Verringerung der Lebensdauer der Riemen. Es ist deshalb auch bereits bekannt, die Riemenscheiben und die Riemen zu kühlen. Dies erfolgt überwiegend durch die Luftführung, bei der die Riemenscheibe im weitesten Sinne nach dem Prinzip eines Radialgebläses arbeitet. Häufig wird dabei jedoch sicht berücksichtigt, dass die Verrichtung aerodynamischer Arbeit die Leistungsaufnahme der Riemenscheibe erhöht und damit den Wirkungsgrad des gesamten Riementriebes verschlechtert. Aber auch andere Ausführungen, die nicht direkt auf die Kühlung nach dem Prinzip eines Radialgebläses abzielen, nehmen unter Umständen hohe aerodynamische Leistungen auf.

Zur eingangs erwähnten Materialeinsparung und zum Erreichen niedriger Massenträgheitsmomente werden insbesondere bei größeren Riemenscheibendurchmessern häufig Ausführungen gewählt, bei denen der Verbindungsbereich von geraden oder gebogenen Speichen gebildet wird. Obwohl nicht erwünscht, wirken die Speichen ebenfalls nach Art eines Radialgebläses, saugen im Nabenbereich Umgebungsluft an und fördern diese in den Felgenbereich. Die hierfür aufgenommene Leistung mindert ebenfalls den Wirkungsgrad des Riementriebes. Sie steigt mit steigender Speichenfläche und steigender Umfangsgeschwindigkeit an.

Die gattungsgemäße US 5,368,525 A beschreibt eine Riemenscheibe mit einer Nabe, einem flanschartigen Felgenabschnitt und einer aus Kunstharz geformten Scheibe als Verbindungsbereich zwischen Nabe und Felge. Des weiteren ist eine scheibenförmige Einlage an der Nabe angeschweißt und erstreckt sich zum Inneren des scheibenförmigen Körpers. Elliptische Eingriffslöcher befinden sich in der Einlage und sind durch ein innen liegendes synthetisches Harzmaterial ausgefüllt. Das Harzmaterial dient dabei der Verringerung von zwischen der Scheibe und der Nabe aufgrund von Torsionsschwingungen auftretenden Spannungen.

Aufgabe der vorliegenden Erfindung ist es, ein vollkommen neuartiges Riemenscheibenkonzept zu schaffen, das dem jeweiligen Einsatzbereich und den konstruktiven Vorgaben auf einfache Weise angepasst werden kann und bei ausreichender Kühlwirkung eine geringe Leistungsaufnahme aufweist.

Diese Aufgabe wird erfindungsgemäß mit einer Riemenscheibe der eingangs genannten Gattung mit den Merkmalen des Anspruchs 1 gelöst.

Der Erfindung liegt der Gedanke zugrunde, die kraftübertragenden Verbindungselemente dem jeweiligen Einsatzbereich und den konstruktiven Vorgaben entsprechend gestalten zu können, ohne Rücksicht auf andere Aspekte nehmen zu müssen, wie beispielsweise die Leistungsaufnahme aufgrund aerodynamischer Arbeit. Dies ist möglich, weil die kraftübertragenden Verbindungselemente wie Speichen oder Durchbrüche in der jeweils notwendigen und gewünschten Gestaltung ausgeführt werden können, und die aerodynamischen Aspekte durch Ver- und/oder Auskleiden mit Füllelementen berücksichtigt werden können. Es ist bekannt, dass auch bei glatten, nicht unterbrochenen, frei rotierenden Radscheiben aufgrund der Grenzschichtreibung ein Drehmoment entsteht (vgl. Bohl, W: Technische Strömungsmechanik, Vogelverlag 1971). Durch die "Schleppwirkung" werden die Luftteilchen, welche sich in der Nähe der ringförmigen Seitenflächen einer glatten Riemenscheibe befinden, mit der rotierenden Scheibe mit bewegt. Dabei erfahren sie eine Zentripetalbeschleunigung, wodurch eine nach außen, zur Felge der Riemenscheibe hin gerichtete Strömung erzeugt wird. Durch die gezielte Anströmung der wärmebelasteten Felge wird in den meisten Anwendungsfällen ausreichende Kühlwirkung erzeugt, ohne dass dadurch eine größere Leistungsaufnahme wie bei nach dem Prinzip eines Radialgebläses arbeitenden Verbindungsbereichen in Kauf genommen werden müsste.

Vorteilhafterweise bestehen die ver- oder auskleidenden Füllelemente aus einem Kunststoffmaterial. Hierfür eignet sich besonders ein geschlossenporiges Schaummaterial, das selbst bei kompliziert geformten kraftübertragenden Verbindungselementen die Ausbildung einer vorzugsweise geschlossenen scheibenförmigen Seitenfläche auf einfache Weise ermöglicht.

In der Regel nehmen konstruktionsbedingt die kraftübertragenden Verbindungselemente lediglich einen Teil der Gesamtfläche des Verbindungsbereiches ein. Erfindungsgemäß wird in solchen Fällen der übrige Teil der Gesamtfläche des Verbindungsbereiches von Füllelementen, vorzugsweise solchen geringer Dichte, gebildet.

Ist konstruktiv bereits ein ebener Verbindungsbereich vorgesehen, der lediglich Durchbrechungen aufweist, ist es vorteilhaft, als Kunststoffmaterial für die verkleidenden Füllelemente eine Folie oder gegebenenfalls eine faserverstärkte Schicht vorzusehen.

Sind die kraftübertragenden Verbindungselemente ebenfalls im Wesentlichen scheibenförmig ausgestaltet, können die verkleidenden Füllelemente eine Art "Aufdopplung" bilden, um die gewünschte glatte Oberfläche der Riemenscheibe im Verbindungsbereich herzustellen.

Selbstverständlich ist es im Rahmen der Erfindung möglich, im Bedarfsfalle die Maßnahmen "Ausfüllen", "Verkleiden" und "Überkleben" zu kombinieren.

Ein Vorteil der erfindungsgemäßen Ausgestaltung ist im übrigen, dass die besten Ergebnisse bei hohen Umfangsgeschwindigkeiten der Riemenscheibe bzw. des Riementriebes erreicht werden, da die aerodynamischen Verluste bei herkömmlichen Riemenscheibenkonstruktionen bei hohen Umfangsgeschwindigkeiten, mit denen heutige Riementriebe betrieben werden, besonders deutlich auftreten.

Im Folgenden sind zur weiteren Erläuterung und zum besseren Verständnis der Erfindung drei Ausführungsbeispiele unter Bezugnahme auf die beigefügten Zeichnungen kurz beschrieben.

Die drei Ausführungsbeispiele stellen lediglich drei Möglichkeiten aus einer Vielzahl von Ausführungsformen dar, die vom Schutzumfang des Patentanspruches 1 umfasst sind.

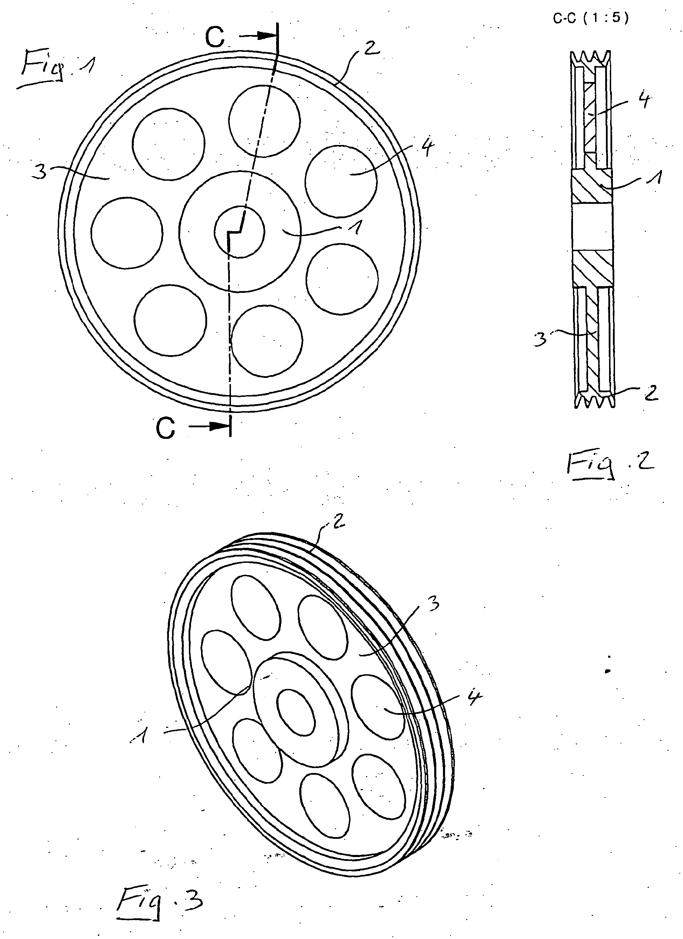

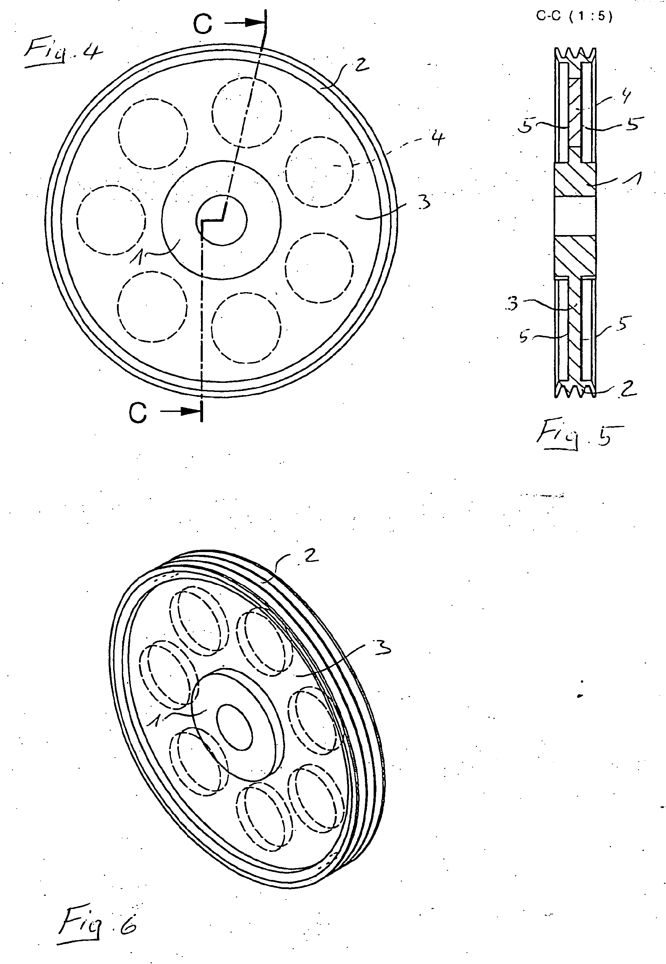

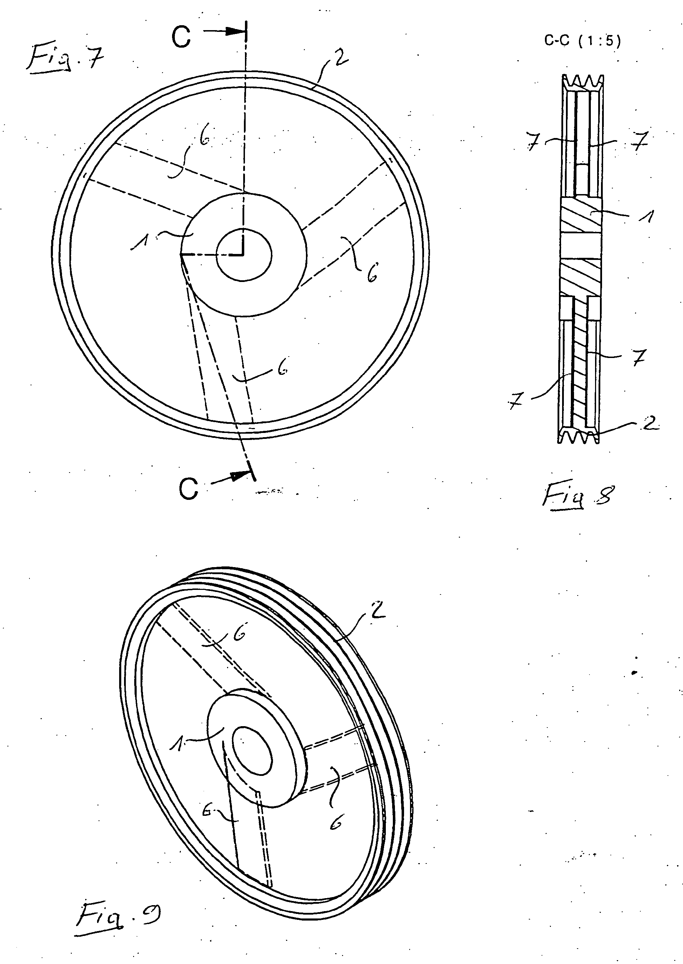

- Figuren 1, 2 und 3: zeigen schematisch in einer Seitenansicht, in einem Schnitt sowie in einer perspektivischen Darstellung ein erstes Ausführungsbeispiel einer erfindungsgemäßen Riemenscheibe, bei der das kraftübertragende Verbindungselement des Verbindungsbereiches aus einer gelochten Scheibe gebildet ist,
- Figuren 4, 5 und 6: zeigen schematisch in einer Seitenansicht, in einem Schnitt sowie in einer perspektivischen Darstellung ein zweites Ausführungsbeispiel einer erfindungsgemäßen Riemenscheibe, bei der das kraftübertragende Verbindungselement des Verbindungsbereiches ebenfalls aus einer gelochten Scheibe gebildet ist, und
- Figuren 7, 8 und 9: zeigen in einer Seitenansicht, einer Schnittdarstellung sowie einer perspektivischen Ansicht schematisch ein drittes Ausführungsbeispiel einer Riemenscheibe, bei der die kraftübertragenden Verbindungselemente des Verbindungsbereichs von drei Speichen gebildet sind.

Wie den Figuren aller drei Ausführungsbeispiele zu entnehmen ist, besteht jede Riemenscheibe aus einer Nabe 1 und einer Felge 2. Zwischen der Nabe 1 und der Felge 2 ist ein Verbindungsbereich angeordnet, der bei allen drei Ausführungsbeispielen aus kraftübertragenden Verbindungselementen sowie ver- und/oder auskleidenden Füllelementen besteht.

Beim ersten Ausführungsbeispiel gemäß den Figuren 1, 2 und 3 werden die kraftübertragenden Verbindungselemente 3 von einer Scheibe mit insgesamt sieben Löchern gebildet.

Aufgrund der eingangs geschilderten Aspekte sind die Löcher erfindungsgemäß mit Füllelementen 4 ausgefüllt, wie sich aus der Schnittdarstellung der Figur 2 ergibt.

Das in den Figuren 4, 5 und 6 dargestellte zweite Ausführungsbeispiel ist in gleicher Weise wie das in den Figuren 1, 2 und 3 dargestellte Ausführungsbeispiel ausgebildet. Zum Unterschied gegenüber dem ersten Ausführungsbeispiel ist jedoch die mit Löchern versehene Scheibe nicht nur mit Füllelementen 4 ausgekleidet, sondern darüber hinaus zusätzlich auch zu beiden Seiten der Riemenscheibe eine Kunststofffolie oder eine Kunststoffschicht aufgebracht, die den gesamten Verbindungsbereich von der Nabe 1 bis zur Felge 2 überdeckt.

Bei dem in den Figuren 7, 8 und 9 dargestellten Ausführungsbeispiel sind die kraftübertragenden Verbindungselemente in Form von Speichen 6 ausgebildet. Der Zwischenraum zwischen den Speichen ist zum Unterschied zu dem in den Figuren 1 bis 6 dargestellten Ausführungsbeispiel nicht mit einem Füllmaterial aufgefüllt, was grundsätzlich im Rahmen der Erfindung ebenfalls möglich wäre. Vielmehr sind zu beiden Seiten der Riemenscheibe den gesamten Verbindungsbereich überdeckende Schichten 7 aus Kunststoff aufgebracht. Diese Schichten 7 können in verschiedenster Weise als Folie, Platte oder dergl. Wandung ausgebildet und gegebenenfalls auch faserverstärkt sein.

Wie bereits erwähnt, stellen die dargestellten Ausführungsformen lediglich Beispiele aus einer Vielzahl von im Rahmen der Erfindung möglichen Ausführungsformen dar.

## Patentansprüche

1. Riemenscheibe mit einer Nabe (1), einer Felge (2) und einem zwischen Nabe und Felge angeordneten Verbindungsbereich, wobei der Verbindungsbereich aus kraftübertragenden Verbindungselementen (3, 6) sowie ver- und/oder auskleidenden Füllelementen (4, 5, 7) besteht, **dadurch gekennzeichnet, dass** die Füllelemente, eine glatte Oberfläche des Verbindungsbereichs erzielen.

2. Riemenscheibe nach Anspruch 1,
**dadurch gekennzeichnet, dass**
die Füllelemente (4) aus einem Kunststoffmaterial bestehen.

3. Riemenscheibe nach Anspruch 2,
**dadurch gekennzeichnet, dass**
das Kunststoffmaterial ein geschlossenporiges Schaummaterial ist.

4. Riemenscheibe nach Anspruch 2,
**dadurch gekennzeichnet, dass**
das Kunststoffmaterial eine Folie ist.

5. Riemenscheibe nach Anspruch 2,
**dadurch gekennzeichnet, dass**
das Kunststoffmaterial eine faserverstärkte Schicht ist.

6. Riemenscheibe nach Anspruch 2,
**dadurch gekennzeichnet, dass**
die Füllelemente aus einem Schaumkern und im Bereich ihrer Oberfläche aus einer Folie bestehen.

## Claims

1. Pulley having a hub (1), a rim (2) and a connecting region arranged between hub and rim, wherein the connecting region consists of force-transmitting connecting elements (3, 6) and covering and/or lining filling elements (4, 5, 7), **characterised in that** the filling elements achieve a smooth surface of the connecting region.

2. Pulley according to claim 1, **characterised in that** the filling elements (4) consist of a plastic material.

3. Pulley according to claim 2, **characterised in that** the plastic material is a closed-pore foam material.

4. Pulley according to claim 2, **characterised in that** the plastic material is a film.

5. Pulley according to claim 2, **characterised in that** the plastic material is a fibre-reinforced layer.

6. Pulley according to claim 2, **characterised in that** the filling elements consist of a foam core and in the region of their surface of a film.

## Revendications

1. Poulie avec un moyeu (1), une jante (2) et une zone de liaison disposée entre le moyeu et la jante, la zone de liaison étant composée d'éléments de liaison (3, 6) transmettant les efforts, ainsi que d'éléments de remplissage (4, 5, 7) assurant un revêtement et/ou une couverture, **caractérisée en ce que** les éléments de remplissage donnent une surface lisse à la zone de liaison.

2. Poulie selon la revendication 1, **caractérisée en ce que** les éléments de remplissage (4) sont composés d'un matériau synthétique.

3. Poulie selon la revendication 2, **caractérisée en ce que** le matériau synthétique est un matériau alvéolaire à pores fermés.

4. Poulie selon la revendication 2, **caractérisée en ce que** le matériau synthétique est une feuille.

5. Poulie selon la revendication 2, **caractérisée en ce que** le matériau synthétique est une couche renforcée par des fibres.

6. Poulie selon la revendication 2, **caractérisée en ce que** les éléments de remplissage sont composés d'un noyau alvéolaire et, dans la zone de leur surface, d'une feuille.
